# EUROPÄISCHE PATENTSCHRIFT

(11) **EP 3 468 817 B1**
(45) Veröffentlichungstag und Bekanntmachung des Hinweises auf die Patenterteilung: **16.09.2020**
(21) Anmeldenummer: 17728532.7
(22) Anmeldetag: 07.06.2017
(51) Int. Cl.: B60C 23/04

(54) **SYSTEM ZUR REIFENDRUCKÜBERWACHUNG UND VERFAHREN ZUR MONTAGE EINES REIFENDRUCKÜBERWACHUNGSSYSTEMS AN EINER FELGE**
SYSTEM FOR MONITORING TYRE PRESSURE AND METHOD FOR MOUNTING A TYRE PRESSURE MONITORING SYSTEM ON A RIM
SYSTÈME DE CONTRÔLE DE LA PRESSION DES PNEUS ET PROCÉDÉ DE MONTAGE D'UN SYSTÈME DE CONTRÔLE DE LA PRESSION DES PNEUS SUR UNE JANTE

(30) Priorität: 13.06.2016 DE 102016110805
(43) Veröffentlichungstag der Anmeldung: 17.04.2019
(73) Patentinhaber: Huf Baolong Electronics Bretten GmbH, 75015 Bretten (DE)
(72) Erfinder: SEIFERT, Andre, 75181 Pforzheim (DE)
(74) Vertreter: Twelmeier Mommer & Partner
(86) Internationale Anmeldenummer: PCT/EP2017/063832
(87) Internationale Veröffentlichungsnummer: WO 2017/216008

(56) Entgegenhaltungen:
- DE-U1-202016 101 336
- JP-B2- 5 933 422

## Beschreibung

Die Erfindung geht aus von einem System zur Reifendrucküberwachung mit den im Oberbegriff des Anspruchs 1 angegebenen Merkmalen, wie es aus der DE 20 2016 101 336 U1 bekannt ist. Ein solches System weist eine Reifendrucküberwachungseinheit, die einen Drucksensor zum Messen des Reifendrucks und einen Sender zum Übertragen von Druckdaten enthält, und ein Reifenventil auf, an dem die Reifendrucküberwachungseinheit befestigt wird.

Aus der JP 5 933422 B2 ist ein System zur Reifendrucküberwachung bekannt, bei dem an einem Gehäuse der Reifendrucküberwachungseinheit ein Rastelement montiert wird, das dann bei der Befestigung der Reifendrucküberwachungseinheit an einem Ventil in eine Rastausnehmung des Ventilschafts eingreift.

An die Befestigung der Reifendrucküberwachungseinheit an dem Ventil werden eine Reihe von Anforderungen gestellt. Einerseits muss die Befestigung mechanisch belastbar sein und den während der Fahrt bei hohen Geschwindigkeiten von beispielsweise 250 km/h auftretenden Beschleunigungen Stand halten, andererseits soll die Befestigung möglichst kostengünstig herstellbar sein und eine einfache Montage der Reifendrucküberwachungseinheit an dem Reifenventil ermöglichen. Bei sogenannten Snap-In Ventilen, deren Ventilschaft von einer Gummidichtung umgeben ist, kommt hinzu, dass die Gummidichtung durch Kippmomente belastet wird, welche die Dichtung gegen den Rand der Felgenbohrung drücken und durch die Masse der am Ventil befestigten Reifendrucküberwachungseinheit sowie des Ventils selbst hervorgerufen werden. Diese Kippmomente müssen so gering gehalten werden, dass die Gummidichtung dadurch auch bei hohen Geschwindigkeiten nicht beschädigt wird.

Kippmomente eines Systems zur Reifendrucküberwachung lassen sich reduzieren, indem die Masse der Reifendrucküberwachungseinheit reduziert wird. Eine andere Möglichkeit besteht darin, den Massenschwerpunkt des Systems aus Ventil und Reifendrucküberwachungseinheit im Reifeninneren möglichst nahe an die Ventildurchtrittsbohrung der Felge oder sogar in diese hinein bzw. aus dem Reifen heraus nach außen zu verlagern. Dies kann dadurch erreicht werden, dass der Schwerpunkt der Reifendrucküberwachungseinheit näher an die Felge gebracht wird oder die Masse des Ventils außerhalb des Reifens erhöht wird, beispielsweise durch einen Ring, eine Verdickung oder ein sonstiges Ausgleichsgewicht.

Aufgabe der vorliegenden Erfindung ist es, einen Weg aufzuzeigen, wie sich eine Reifendrucküberwachungseinheit mit geringem Montageaufwand zuverlässig an einem Reifenventil befestigen lässt, so dass während der Fahrt nur geringe Kippmomente auftreten.

Diese Aufgabe wird durch ein Reifendrucküberwachungssystem mit den im Anspruch 1 genannten Merkmalen gelöst. Vorteilhafte Weiterbildungen der Erfindung sind Gegenstand von Unteransprüchen.

Eine erfindungsgemäße Reifendrucküberwachungseinheit wird auf einen Schaft eines Reifenventils aufgesteckt, der mehrere hintereinander angeordnete Rastausnehmungen aufweist, in die ein Rastelement eingreift. Das Rastelement ist einteilig mit einer Wand des Gehäuses der Reifendrucküberwachungseinrichtung ausgebildet, besteht also ebenso wie das Gehäuse der Reifendrucküberwachungseinheit aus Kunststoff. Da ein Gehäuse ohnehin benötigt wird, kann auf diese Weise ein Rastelement ohne wesentliche Zusatzkosten hergestellt werden, beispielsweise indem die Gehäusewand und das Rastelement integral durch Spritzgießen hergestellt werden. Die Reifendrucküberwachungseinheit lässt sich sehr einfach an einem Ventil befestigen, nämlich indem die Reifendrucküberwachungseinheit auf den Ventilschaft aufgesteckt wird, so dass das Rastelement in eine der Rastausnehmungen einrastet. Dies ist ohne Werkzeug möglich, so dass die Montage an einem Reifen sehr einfach ist.

Indem man eine Reihe von Rastausnehmungen an dem Schaft des Ventils anbringt, kann die Reifendrucküberwachungseinheit bei verschiedenen Felgengeometrien verwendet werden und dennoch stets sehr nahe an der Ventildurchtrittsbohrung befestigt werden, so dass bei der Fahrt nur relativ kleine Kippmomente auftreten können. Die Reifendrucküberwachungseinheit wird dazu auf dem Ventilschaft so weit wie möglich zu der Ventildurchtrittsbohrung hin verschoben bis eine Endposition erreicht ist. Wie nahe die Endposition an der Ventildurchtrittsbohrung der Felge liegt, hängt davon ab, wie viele Rastausnehmungen der Schaft aufweist und in welchem Abstand diese angeordnet sind.

Die Reifendrucküberwachungseinheit weist eine Öffnung auf, in die der Ventilschaft gesteckt wird. Diese Öffnung ist bevorzugt ein durchgehender Kanal. So kann Luft, die durch das Ventil in den Reifen gepumpt wird, mit relativ geringem Strömungswiderstand durch den Ventilschaft und die Öffnung der Reifendrucküberwachungseinheit in den Innenraum des Reifens gelangen.

Eine vorteilhafte Weiterbildung der Erfindung sieht vor, dass das Rastelement Teil eines Hebelarms ist. Ein Ende des Hebelarms ist an dem Gehäuse der Reifendrucküberwachungseinheit befestigt, während das andere Ende frei ist. Indem das freie Ende des Hebelarms angehoben wird, lässt sich das Rastelement aus seinem Eingriff mit der betreffenden Rastausnehmung lösen, so dass sich die Reifendrucküberwachungseinheit wieder von dem Schaft abnehmen lässt. Dies ist vorteilhaft ohne Verwendung eines Werkzeugs möglich.

Das Rastelement kann als ein Vorsprung, beispielsweise eine Nase oder ein Haken, an dem Hebelarm ausgebildet sein. Bevorzugt ist das Rastelement dabei in einem Abstand von dem freien Ende des Hebelarms angeordnet. Dies hat den Vorteil, dass man beim Greifen und Anheben des Hebelarms nicht durch das Rastelement behindert wird.

Eine weitere vorteilhafte Weiterbildung der Erfindung sieht vor, dass sich der Hebelarm entlang des Ventilschafts erstreckt. Beispielsweise kann der Hebelarm über dem Ventilschaft parallel zu dem Ventilschaft verlaufen. Es ist aber auch möglich, dass der Hebelarm quer zu dem Ventilschaft orientiert ist. Insbesondere in diesem Fall kann der Hebelarm auch ohne einen Vorsprung aufzuweisen in eine der Rastausnehmungen des Ventilschafts eingreifen.

Eine weitere vorteilhafte Weiterbildung der Erfindung sieht vor, dass die Rastausnehmungen Kerben sind. Die Kerben und das Rastelement können dabei eine Sperrvorrichtung bilden, beispielsweise nach Art eines Kabelbinders. Der Eingriff des Rastelements in eine der Rastausnehmungen verhindert dann, dass die Reifendrucküberwachungseinheit von dem Ventilschaft abgenommen wird, lässt aber eine Verschiebung in die entgegengesetzte Richtung zu, also eine Verschiebung der Reifendrucküberwachungseinheit hin zu der Ventilbohrung einer Felge.

Die Anzahl der Rastausnehmungen auf dem Ventilschaft kann weitgehend frei gewählt werden. Grundsätzlich gilt, dass sich die Reifendrucküberwachungseinheit unabhängig von der Geometrie einer gegebenen Felge umso näher an die Ventilbohrung einer Felge schieben lässt, je mehr Rastausnehmungen der Ventilschaft aufweist. Aus Platzgründen lässt sich die Anzahl der Rastausnehmungen ab einer gewissen Grenze aber nur noch steigern, indem die Rastausnehmungen kleiner gemacht werden. Zu kleine Rastausnehmungen reduzieren dabei die mechanische Belastbarkeit der Rastverbindung.

Im Allgemeinen ist es günstig, wenn der Ventilschaft wenigstens 5, vorzugsweise wenigstens 7 Rastausnehmungen aufweist. In der Regel bringt es keinen zusätzlichen Vorteil, wenn man die Anzahl der Rastausnehmungen auf mehr als 12 erhöht.

Weitere Einzelheiten und Vorteile der Erfindung werden an einem Ausführungsbeispiel unter Bezugnahme auf die beigefügten Zeichnungen erläutert. Es zeigen:
- Fig. 1: ein Reifenventil mit einer aufgesteckten Reifendrucküberwachungseinheit;
- Fig. 2: eine weitere Ansicht des Reifenventils mit der Reifendrucküberwachungseinheit;
- Fig. 3: eine geschnittene Detailansicht des Reifenventils und der Reifendrucküberwachungseinheit im verrasteten Zustand; und
- Fig. 4: eine geschnittene Detailansicht des Reifenventils und der Reifendrucküberwachungseinheit im gelösten Zustand.

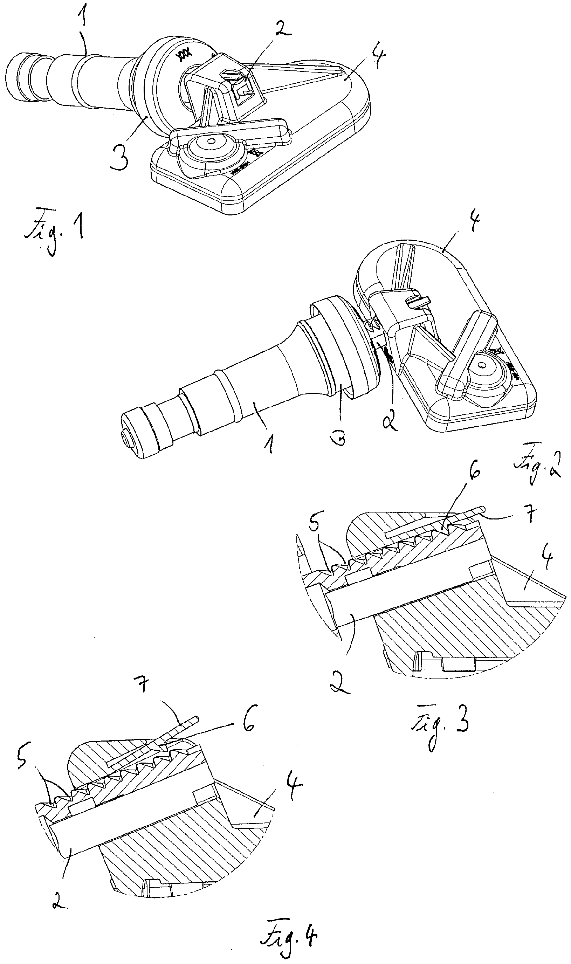

Die Figuren 1 und 2 zeigen in verschiedenen Ansichten ein System zur Reifendrucküberwachung. Eine erste Komponente dieses Systems ist ein Reifenventil 1, beispielsweise ein sogenanntes snap-in Ventil, mit einem Ventilschaft 2, der von einer Gummidichtung 3 umgeben ist. Eine zweite Komponente des Reifendrucküberwachungssystems ist eine Reifendrucküberwachungseinheit 4, die ein Gehäuse aus Kunststoff aufweist, in dem ein Drucksensor zum Messen des Reifendrucks und ein Sender zum drahtlosen Übertragen von Reifendruckdaten angeordnet sind. Das Gehäuse ist aus Kunststoff und weißt eine Öffnung auf, in die der Ventilschaft 2 des Reifenventils 1 gesteckt ist. Die Figuren 3 und 4 zeigen in geschnittenen Detailansichten jeweils einen Endabschnitt des Ventilschafts 2 sowie die Öffnung des Gehäuses, in welcher der Ventilschaft 2 steckt.

Wie insbesondere die Figuren 3 und 4 zeigen, weist der Ventilschaft 2 eine Reihe von hintereinander angeordneten Rastausnehmungen 5 auf, in die ein Rastelement 6 der Reifendrucküberwachungseinheit 4 eingreift. Das Rastelement 6 ist einteilig mit einer Wand des Gehäuses der Reifendrucküberwachungseinheit 4 ausgebildet. Das Rastelement 6 ist somit ebenso wie das Gehäuse der Reifendrucküberwachungseinheit 4 aus Kunststoff. Das Rastelement 6 kann so kostengünstig integral mit dem Gehäuse hergestellt werden, nämlich beim Spritzgießen des Gehäuses der Reifendrucküberwachungseinheit 4 hergestellt werden.

Das Rastelement 6 kann Teil eines Hebelarmes 7 aus Kunststoff sein, der mit einem Ende von einer Wand des Gehäuses der Reifendrucküberwachungseinheit 4 ausgeht und an seinem gegenüberliegenden Ende frei beweglich ist. Durch Anheben des freien Endes kann deshalb das Rastelement 6 aus seinem Eingriff in eine der Rastausnehmungen 5 des Ventilschafts 2 gelöst werden, sodass die Reifendrucküberwachungseinheit 4 wieder von dem Ventilschaft 2 abgenommen werden kann.

Der Hebelarm 7 erstreckt sich parallel zu dem Ventilschaft 2. Bei dem gezeigten Ausführungsbeispiel sind die Rastausnehmungen 5 an einer Oberseite des Ventilschafts 2 angeordnet, die am montierten Zustand von dem Felgenbett eines Rades abgewandt ist. Die Rastausnehmungen 5 können beispielsweise auch seitlich an dem Ventilschaft 2 angeordnet sein. An dem Hebelarm 7 können an sich auch mehrere Rastelemente 6 angeordnet sein, beispielsweise um eine mechanisch belastbarere Verbindung zu ermöglichen. Ein einziges Rastelement 6 ist jedoch ausreichend.

Die Rastausnehmungen 5 sind bevorzugt als Kerben ausgebildet. Dabei ist besonders vorteilhaft, wenn die Kerben auf einer ersten Seite steiler ansteigen als auf einer gegenüberliegenden Seite. Mit anderen Worten sind die Kerben also auf einer ersten Seite von einer ersten Fläche und auf seiner gegenüberliegenden Seite von einer zweiten Fläche begrenzt, wobei die erste Fläche steiler ansteigt, als die zweite Fläche. Die Reifendrucküberwachungseinheit 4 kann deshalb über die zweite Fläche der Kerbe weiter auf den Schaft 2 aufgeschoben werden, während die steilere erste Fläche ein unerwünschtes Lösen der Reifendrucküberwachungseinheit 4 von dem Ventilschaft 2 verhindert. Die steilere erste Fläche kann senkrecht zu der Längsrichtung des Ventilschafts 2 orientiert sein oder mit der Längsrichtung des Ventilschafts 2 einen Winkel von mehr oder weniger als 90° einschließen.

Bei dem gezeigten Ausführungsbeispiel verhakt das Rastelement 6 so mit den Kerben, dass es sich aus der betreffenden Kerbe löst, wenn die Reifendrucküberwachungseinheit 4 weiter auf den Schaft 2 aufgeschoben wird, und es eine Verschiebung in der entgegen gesetzten Richtung verhindert.

Um das gezeigte Reifendrucküberwachungssystem an einer Felge zu montieren, wird das Reifenventil 1 in die Ventilbohrung der Felge gesteckt. Die Reifendrucküberwachungseinheit 4 kann dabei bereits auf den Ventilschaft 2 aufgesteckt sein. Das Reifendrucküberwachungssystem kann in einem Zustand gemäß Fig. 3 angeliefert werden, in dem das Rastelement 6 der Reifendrucküberwachungseinheit 4 in eine der Rastausnehmungen 5 des Ventilschafts eingreift, insbesondere in die letzte Rastausnehmung 5, also jene Rastausnehmung 5, die dem inneren Ende des Schafts 2 am nächsten liegt.

Nach dem Aufstecken der Reifendrucküberwachungseinheit 4 auf den Ventilschaft auf den Ventilschaft 2 wird die Reifendrucküberwachungseinheit 4 so nahe wie möglich zu der Ventilbohrung der Felge hin verschoben. In seiner Endposition ist die Reifendrucküberwachungseinheit 4 dann sehr nahe an der Felge und der Schwerpunkt des Reifendrucküberwachungssystems folglich ebenfalls sehr nahe an der Felge oder sogar innerhalb der Ventilbohrung. Wie groß ein eventueller Spalt zwischen der Felge und der Reifendrucküberwachungseinheit 4 in deren Endposition ist, wird durch den Abstand einer Rastausnehmung 5 zu einer benachbarten Rastausnehmung 5 bestimmt. Je kleiner diese Abstände sind, desto besser kann die Endposition der Reifendrucküberwachungseinheit 4 an die Geometrie einer gegebenen Felge angepasst werden. Auf dem Ventilschaft 2 können beispielsweise fünf oder mehr Rastausnehmungen 5 angeordnet sein. Günstig sind sieben oder mehr Rastausnehmungen 5. Die Anzahl der Rastausnehmungen auf mehr als fünfzehn Rastausnehmungen zu erhöhen, bringt im Allgemeinen keinen zusätzlichen Vorteil.

Der Ventilschaft 2 kann an einer Längsseite offen sein, beispielsweise an seiner Unterseite. Bei dem gezeigten Ausführungsbeispiel hat der Ventilschaft 2 näherungsweise eine U-förmige Form. Durch die offene Längsseite des Ventilschafts kann Luft beim Aufpumpen eines Reifens aus dem Ventil austreten. Der Ventilschaft 2 ist zudem an seinem Ende offen. Beim Aufpumpen des Reifens kann Luft also durch einen Ventilschaft 2 und die Öffnung der Reifendrucküberwachungseinheit 4 hindurch in das Innere des Reifens einströmen.

Der Ventilschaft 2 des Reifenventils kann einstückig ausgebildet sein. Möglich ist es aber auch, einen aus zwei Teilstücken zusammen gesetzten Ventilschaft 2 zu verwenden. Dabei kann ein erster Abschnitt des Ventilschafts, der von der Gummidichtung 3 umgeben ist, aus einem ersten Material hergestellt sein, beispielsweise Messing oder Bronze, während ein zweiter Teil des Ventilschafts 2, der aus der Gummidichtung herausragt und die Rastausnehmungen 5 trägt, aus einem zweiten Material hergestellt sein kann, beispielsweise aus Edelstahl. Die Anforderungen an die beiden Abschnitte des Ventilschafts, nämlich einen von der Gummidichtung 3 umgebenen Abschnitt einerseits und einen die Rastausnehmungen 5 aufweisenden Abschnitt andererseits, sind sehr unterschiedlich, so dass es vorteilhaft sein kann, den Ventilschaft aus zwei Teilstücken zusammen zu setzen. Allerdings ist damit ein erhöhter Fertigungsaufwand verbunden, so dass in vielen Fällen eine einstückige Ausführung günstiger ist.

### Bezugszeichenliste

- 1: Reifenventil
- 2: Ventilschaft
- 3: Gummidichtung
- 4: Reifendrucküberwachungseinheit
- 5: Rastausnehmungen
- 6: Rastelement
- 7: Hebelarm

## Patentansprüche

1. System zur Reifendrucküberwachung mit
einem Reifenventil (1) und
einer Reifendrucküberwachungseinheit (4), die ein Gehäuse aus Kunststoff aufweist, in dem ein Drucksensor zum Messen des Reifendrucks und ein Sender zum drahtlosen Übertragen von Reifendruckdaten angeordnet sind,
wobei die Reifendrucküberwachungseinheit (4) auf einen Schaft (2) des Reifenventils (1) aufgesteckt ist, und
der Schaft (2) eine Rastausnehmung (5) aufweist, in die ein Rastelement (6) der Reifendrucküberwachungseinheit (4) einrastet,
wobei das Rastelement (6) einteilig mit einer Wand des Gehäuses ausgebildet ist, **dadurch gekennzeichnet, dass**
der Schaft (2) mehrere hintereinander angeordnete Rastausnehmungen (5) aufweist.

2. System nach Anspruch 1, **dadurch gekennzeichnet, dass** das Rastelement (6) Teil eines Hebelarms (7) ist.

3. System nach Anspruch 2, **dadurch gekennzeichnet, dass** sich der Hebelarm (7) entlang des Schafts (2) erstreckt.

4. System nach einem der vorstehenden Ansprüche, **dadurch gekennzeichnet, dass** die Rastausnehmungen (5) an einer Oberseite des Schafts (2) angeordnet sind, die im montierten Zustand von dem Felgenbett abgewandt ist.

5. System nach einem der vorstehenden Ansprüche, **dadurch gekennzeichnet, dass** die Rastausnehmungen (5) Kerben sind.

6. System nach Anspruch 5, **dadurch gekennzeichnet, dass** die Kerben auf einer ersten Seite von einer ersten Fläche und auf einer gegenüberliegenden Seite von einer zweiten Fläche begrenzt werden, wobei die erste Fläche steiler ansteigt als die zweite Fläche, so dass die Reifendrucküberwachungseinheit (4) über die zweite Fläche der Kerben weiter auf den Schaft (2) aufgeschoben werden kann, aber durch die erste Fläche ein unerwünschtes Lösen der Reifendrucküberwachungseinheit (4) von dem Schaft (2) verhindert wird.

7. System nach Anspruch 5 oder 6, **dadurch gekennzeichnet, dass** das Rastelement (6) so mit den Kerben verhakt, dass es sich aus der Kerbe löst, wenn die Reifendrucküberwachungseinheit (4) weiter auf den Schaft (2) aufgeschoben wird, und es eine Verschiebung in der entgegen gesetzten Richtung verhindert.

8. System nach einem der vorstehenden Ansprüche, **dadurch gekennzeichnet, dass** der Schaft (2) wenigstens fünf, vorzugsweise wenigstens sieben, in einer Reihe angeordnete Rastausnehmungen (5) aufweist.

9. System nach einem der vorstehenden Ansprüche, **dadurch gekennzeichnet, dass** der Schaft (2) eine in seiner Längsrichtung verlaufende Öffnung aufweist, durch die Luft austreten kann, die durch das Ventil in den Reifen gepumpt wird.

## Claims

1. A tyre pressure monitoring system comprising
a tyre valve (1) and
a tyre pressure monitoring unit (4) that comprises a plastic housing, in which a pressure sensor for measuring the tyre pressure and a transmitter for wirelessly transmitting tyre pressure data are arranged,
wherein the tyre pressure monitoring unit (4) is attached to a stem (2) of the tyre valve (1) and
the stem (2) comprises latching recesses (5), into which a latching element (6) of the tyre pressure monitoring unit (4) engages,
wherein the latching element (6) is realized integrally with a wall of the housing, **characterized in that**
the stem (2) comprises a plurality of latching recesses arranged one behind the other.

2. The system according to claim 1, **characterized in that** the latching element (6) forms part of a lever arm (7).

3. The system according to claim 2, **characterized in that** the lever arm (7) extends along the stem (2).

4. The system according to any one of the preceding claims, **characterized in that** the latching recesses (5) are arranged on an upper side of the stem (2), which in the installed state faces away from the rim well.

5. The system according to any one of the preceding claims, **characterized in that** the latching recesses (5) are notches.

6. The system according to claim 5, **characterized in that** the notches are defined by a first face on a first side and by a second face on the opposite side, wherein the first face has a steeper rise than the second face such that the tyre pressure monitoring unit (4) can be pushed further on the stem (2) by means of the second face, but an undesirable separation of the tyre pressure monitoring unit (4) from the stem (2) is prevented by means of the first face.

7. The system according to claim 5 or 6, **characterized in that** the latching element (6) engages with the notches in such a way that it disengages from the respective notch when the tyre pressure monitoring unit (4) is pushed further on the stem (2) and prevents a displacement in the opposite direction.

8. The system according to any one of the preceding claims, **characterized in that** the stem (2) comprises at least five latching recesses (5), preferably at least seven latching recesses, which are arranged in a row.

9. The system according to one of the preceding claims, **characterized in that** the stem (2) comprises an opening, which extends in its longitudinal direction and allows the escape of air being pumped into the tyre through the valve.

## Revendications

1. Système destiné à superviser la pression des pneus, pourvu d'une valve de pneu (1) et
d'une unité de supervision de la pression des pneus (4), qui comporte un boîtier en matière plastique, dans lequel sont placés un capteur de pression, destiné à mesurer la pression des pneus et un émetteur, destiné à transmettre sans fil des données de pression des pneus,
l'unité de supervision de la pression des pneus (4) étant emboîtée sur une tige (2) de la valve de pneu (1), et
la tige (2) comportant un évidement d'enclenchement (5) dans lequel s'enclenche un élément d'enclenchement (6) de l'unité de supervision de la pression des pneus (4),
l'élément d'enclenchement (6) étant conçu en monobloc avec une paroi du boîtier, **caractérisé en ce que**
la tige (2) comporte plusieurs évidements d'enclenchement (5) placés les uns derrière les autres.

2. Système selon la revendication 1, **caractérisé en ce que** l'élément d'enclenchement (6) est une partie intégrante d'un bras de levier (7).

3. Système selon la revendication 2, **caractérisé en ce que** le bras de levier (7) s'étend le long de la tige (2).

4. Système selon l'une quelconque des revendications précédentes, **caractérisé en ce que** les évidements d'enclenchement (5) sont placés sur une face supérieure de la tige (2) qui en position montée est opposée à la base de jante.

5. Système selon l'une quelconque des revendications précédentes, **caractérisé en ce que** les évidements d'enclenchement (5) sont des encoches.

6. Système selon la revendication 5, **caractérisé en ce que** les encoches sont délimitées sur une première face d'une première surface et sur une face opposée d'une deuxième surface, la première surface étant plus abrupte que la deuxième surface, de sorte que l'unité de supervision de la pression des pneus (4) puisse être poussée par-dessus la deuxième surface des encoches plus loin sur la tige (2), mais que la première surface empêche une désolidarisation non souhaitée de l'unité de supervision de la pression des pneus (4) de la tige (2).

7. Système selon la revendication 5 ou 6, **caractérisé en ce que** l'élément d'enclenchement (6) s'accroche dans les encoches de telle sorte qu'il se désolidarise de l'encoche lorsqu'on pousse l'unité de supervision de la pression des pneus (4) plus loin sur la tige (2) et qu'il empêche un déplacement dans la direction opposée.

8. Système selon l'une quelconque des revendications précédentes, **caractérisé en ce que** la tige (2) comporte au moins cinq, de préférence au moins sept évidements d'enclenchement (5) placés dans une rangée.

9. Système selon l'une quelconque des revendications précédentes, **caractérisé en ce que** la tige (2) comporte un orifice s'écoulant dans sa direction longitudinale, à travers lequel de l'air qui est pompé dans le pneu à travers la valve peut s'échapper.
